Europäisches Patentamt

European Patent Office

Office européen des brevets

(11) Numéro de publication : **0 306 385 B1**

# (12) FASCICULE DE BREVET EUROPEEN

(45) Date de publication du fascicule du brevet :
26.02.92 Bulletin 92/09

(51) Int. Cl.⁵ : **C08L 33/12,** // (C08L33/12, 33:08, 27:16)

(21) Numéro de dépôt : **88402093.4**

(22) Date de dépôt : **11.08.88**

(54) **Composition polymère à haute résistance au choc.**

(30) Priorité : **04.09.87 FR 8712295**

(43) Date de publication de la demande :
**08.03.89 Bulletin 89/10**

(45) Mention de la délivrance du brevet :
**26.02.92 Bulletin 92/09**

(84) Etats contractants désignés :
**AT BE CH DE ES FR GB GR IT LI LU NL SE**

(56) Documents cités :
**BE-A- 676 505**
**US-A- 3 843 753**

(73) Titulaire : **ATOCHEM**
**4 & 8, Cours Michelet La Défense 10**
**F-92800 Puteaux (FR)**

(72) Inventeur : **Robinet, Jean-Claude**
**99, rue Jean-Biondi**
**F-60260 Lamorlaye (FR)**

(74) Mandataire : **Rochet, Michel et al**
**ATOCHEM Département Propriété Industrielle**
**4, Cours Michelet La Défense 10 Cedex 42**
**F-92091 Paris-La-Défense (FR)**

EP 0 306 385 B1

Jouve, 18, rue Saint-Denis, 75001 PARIS

## Description

Des compositions polymères comprenant une proportion majoritaire en poids d'un polymère de fluorovinylidène ou d'un copolymère de fluorovinylidène et d'une quantité notable de tétrafluoroéthylène d'une part et une proportion minoritaire en poids d'un polymère de méthacrylate de méthyle d' autre part sont déjà connues notamment par les brevets EP-A-093.038 et EP-A-101.048. Il est également connu par le brevet FR-A-2.104.545 de postpolymériser jusqu'à 150 parties en poids de méthacrylate de méthyle avec 100 parties en poids d'un fluorure de polyvinylidène obtenu par polymérisation en suspension, en vue d'obtenir des films possédant d'excellentes propriétés électriques.

Par ailleurs les plaques à base de polyméthacrylate de méthyle sont déjà bien connues et ont trouvé des applications extrêmement variées, notamment dans les domaines où l'on utilisait jusque là des plaques de verre, en raison de leur transparence, de leur légèreté et de leur prix de revient. Toutefois il est également bien connu que ces plaques présentent :

    – une résistance au choc inférieure à celle du verre de sécurité et d'autres matériaux polymères tels que le polycarbonate.

    – une inflammabilité et une résistance au tir de balle inférieures à celle du polycarbonate.

Le problème que la présente invention s'est attaché à résoudre consiste à mettre au point des matériaux pour la fabrication de plaques coulées de propriétés améliorées, notamment en faibles épaisseurs.

Un premier objet de la présente invention consiste en une composition polymère à haute résistance au choc comprenant (A) au moins un polymère à base de méthacrylate de méthyle et (B) au moins un latex élastomère, caractérisée en ce qu'elle comprend en outre (C) au moins un polymère à base de fluorure de vinylidène, en ce que le rapport en poids (B)/(A) est compris entre 0,1 et 0,5 et en ce que le rapport en poids (C)/(A) est compris entre 0,1 et 0,45.

Par polymère (A) à base de méthacrylate de méthyle au sens de la présente invention on entend aussi bien les homopolymères à base de ce monomère que les copolymères comportant de faibles proportions, par exemple jusqu'à 15 % en poids, de comonomère(s) copolymérisable(s) avec lui, obtenus aussi bien par polymérisation en masse que par polymérisation en suspension ou en émulsion.

Par polymère (C) à base de fluorovinylidène au sens de la présente invention on entend aussi bien les homopolymères à base de ce monomère que les copolymères comportant de faibles proportions (par exemple inférieures à environ 5 % en moles) de comonomère(s) copolymérisable(s) avec lui, tels que le tétrafluoroéthylène.

Par latex élastomère (B) au sens de la présente invention, on entend un produit obtenu par polymérisation séquencée en émulsion, en milieu aqueux, d'essentiellement au moins un monomère "mou" choisi parmi le butadiène et ses dérivés et les acrylates d'alkyle ou d'aralkyle et d'au moins un monomère "dur" choisi parmi les méthacrylates d'alkyle dont le groupe alkyle comporte de 1 à 4 atomes de carbone, le styrène, les styrènes substitués, l'acrylonitrile et le méthacrylonitrile. Le cas échéant la polymérisation de ce monomère pourra être effectuée en présence d'autres monomères copolymérisables à insaturation éthylénique et/ou en présence de monomères de réticulation et/ou de greffage. La fabrication de tels latex, utilisés pour le renforcement au choc de matrices thermoplastiques, est bien connue de l'homme de l'art. On sait notamment qu'en modifiant les conditions de fabrication de ces latex on peut agir sur leur morphologie et, par voie de conséquence, sur leur aptitude à améliorer la résistance au choc et sur leur aptitude à maintenir les propriétés optiques de la matrice à renforcer.

Les différentes morphologies de latex élastomères connues à ce jour pourront être utilisées sans inconvénient dans le cadre de la présente invention. En particulier on pourra utiliser un latex de morphologie "mou-dur" dont la première phase élastomère de coeur est notamment un poly(acrylate d'alkyle) et dont la phase thermoplastique rigide finale (ou couche externe) est notamment un poly(méthacrylate d'alkyle), tel que décrit dans le brevet FR-A-2.092.389. On pourra aussi utiliser un latex de morphologie "dur-mou-dur", dont la première phase, non élastomère, est polymérisée à partir des monomères constituant la matrice thermoplastique à renforcer, dont la phase élastomère intermédiaire est notamment un copolymère acrylate d'alkyle-styrène, et dont la phase finale contient les mêmes monomères que la matrice rigide (A), tel que décrit dans le brevet FR-A-2.159.822 ; dans ce cas il est avantageux que la phase polymère constituant le noyau dur ne soit pas réticulée. Par exemple le noyau dur pourra être constitué de 35 à 80 % en poids de méthacrylate de méthyle et de 65 à 20 % en poids d'acrylate de butyle, et la phase intermédiaire constituée de 80 à 95 % d'acrylate de butyle et de 5 à 20 % en poids de styrène. D'autres morphologies utilisables sont celles, plus complexes, décrites dans les brevets US-A-4.052.525 et FR-A-2.446.296.

Pour résumer on peut dire que le latex élastomère (B) est constitué de particules comportant au moins une couche élastomérique obtenue à partir de monomères "mous" et une couche de compatibilisation avec la matrice (A), obtenue à partir de monomères "durs". Un cas particulier est représenté par des particules dont la morphologie comporte un noyau de monomères "durs", une couche intermédiaire de monomères "mous" et une couche de surface de monomères "durs". De manière générale le latex (B) se présente donc sous forme d'un interpolymère composite multi-couches, dont les particules ont un diamètre moyen compris entre 40 et 500 nm.

Un second objet de la présente invention consiste en un procédé de fabrication d'une composition polymère telle que décrite précédemment, caractérisé en ce que dans une première étape on mélange le polymère (A) et le latex (B) à une température comprise entre 170° et 240°C, puis dans une seconde étape on ajoute et on mélange efficacement le polymère (C) à une température comprise entre 170° et 220°C. La première étape du procédé selon l'invention peut être mise en oeuvre par exemple dans un mélangeur à cylindres ou bien dans une extrudeuse monovis.

Un troisième objet de la présente invention concerne des articles façonnés comprenant au moins un matériau obtenu à partir d'une composition polymère telle que décrite précédemment. Les articles façonnés selon l'invention peuvent se présenter notamment sous forme de plaques d'épaisseur comprise par exemple entre 1 et 8 mm. Lorsque le latex (B) comprend un noyau dur constitué de 35 à 80% en poids de méthacrylate de méthyle et de 65 à 20% en poids d'acrylate de butyle, et lorsque la phase intermédiaire est constituée de 80 à 95% d'acrylate de butyle et de 5 à 20% en poids de styrène, les articles façonnés selon l'invention posséderont en outre la caractéristique avantageuse d'être transparents. Les articles façonnés selon l'invention peuvent également se présenter sous forme d'un matériau multicouche associant une plaque telle que décrite ci-dessus à une plaque de polyméthacrylate de méthyle standard.

Les exemples ci-après ont pour objet d'illustrer l'invention.

## EXEMPLE 1 (comparatif)

On considère un polymère résistant au choc commercialisé par la société ROHM & HAAS sous la marque OROGLASS DR 100 et constitué approximativement de 60% en poids de polyméthacrylate de méthyle et de 40% en poids de latex élastomère dont les particules ont un diamètre moyen de 300 nm. La résistance au choc Izod de ce polymère, mesurée selon la norme NFT 51-911, est :

    Izod entaillé (épaisseur 6 mm) :46 J/m
    Izod non entaillé (épaisseur 3 mm) :560 J/m

Sa résistance au choc multiaxial, déterminée à 23°C conformément à la norme DIN 53.443 sur en échantillon d'épaisseur 1,75 mm, est égale à 1,7 J.

## EXEMPLE 2

A 80 parties en poids du polymère de l'exemple 1 on incorpore 20 parties en poids de polyfluorure de vinylidène commercialisé par la société SOLVAY sous la dénomination SOLEF 2008 en opérant sur une extrudeuse monovis ANDOUARD B 40-20D, vis RB 30, équipée d'une filière à bande. La résistance au choc Izod de l'alliage obtenu, mesurée selon la norme NFT 51-911, est :

    Izod entaillé (épaisseur 6 mm) :57 J/m
    Izod non entaillé (épaisseur 3 mm) :950 J/m

Sa résistance au choc multiaxial, déterminée comme l'exemple précédent, est égale à 4,8 J.

## EXEMPLE 3

En reproduisant les conditions de l'exemple 2, on prépare un alliage constitué de 90 parties en poids du polymère OROGLASS DR 100 et de 10 parties en poids du polymère SOLEF 2008. Cet alliage présente une résistance au choc multiaxial, déterminée comme aux exemples précédents égale à 3,8 J.

## Revendications

1. Composition polymère à haute résistance au choc comprenant (A) au moins un polymère à base de méthacrylate de méthyle et (B) au moins un latex élastomère, caractérisée en ce qu'elle comprend en outre (C) au moins un polymère à base de fluorure de vinylidène, en ce que le rapport en poids (B)/(A) est compris entre 0,1 et 0,5 et en ce que le rapport en poids (C)/(A) est compris entre 0,1 et 0,45.

2. Composition selon la revendication 1, caractérisée en ce que le latex (B) est constitué de particules comportant au moins une couche élastomérique obtenue à partir de monomères mous et une couche de compatibilisation avec le polymère (A), obtenue à partir de monomères durs.

3. Composition selon la revendication 2, caractérisée en ce que les particules du latex (B) comportent une première phase non élastomère, une phase élastomère intermédiaire et une phase finale contenant les mêmes monomères que le polymère (A).

4. Composition selon l'une des revendications 1 à 3, caractérisée en ce que le diamètre moyen des particules est compris entre 40 et 500 nm.

5. Composition selon l'une des revendications 3 et 4, caractérisée en ce que la première phase non élastomère est constituée de 65 à 20 % en poids d'acrylate de butyle et de 35 à 80 % en poids de méthacrylate de méthyle, et la phase élastomère intermédiaire est constituée de 80 à 95 % en poids d'acrylate de butyle et de 5 à 20 % en poids de styrène.

6. Composition selon l'une des revendications 3 à 5, caractérisée en ce que la première phase non élastomère n'est pas réticulée.

7. Procédé de fabrication d'une composition polymère selon la revendication 1, caractérisé en ce que dans une première étape on mélange le polymère (A) et le latex (B) à une température comprise entre 170°C et 240°C, puis dans une seconde étape on ajoute et on mélange efficacement (C) à une température comprise entre 170°C et 220°C.

8. Articles façonnés comprenant au moins un matériau obtenus à partir d'une composition selon la revendication 1.

9. Articles façonnés selon la revendication 8, se présentant sous forme de plaques d'épaisseur comprise entre 1 et 8 mm.

10. Articles façonnés transparents obtenus à partir d'une composition selon la revendication 5.

11. Articles façonnés selon la revendication 8, se présentant sous forme d'un matériau multicouche comprenant une plaque de polyméthacrylate de méthyle standard.

**Patentansprüche**

1. Polymere Zusammensetzung hoher Schlagfestigkeit, die wenigstens ein Polymeres auf der Basis von Methylmethacrylat (A) und wenigstens einen elastomeren Latex (B) enthält, dadurch gekennzeichnet, daß sie darüber hinaus wenigstens ein Polymeres auf Basis von Vinylidenfluorid (C) enthält und daß das Gewichtsverhältnis (B)/(A) zwischen 0,1 und 0,5 und das Gewichtsverhältnis (C)/(A) zwischen 0,1 und 0,45 liegt.

2. Zusammensetzung nach Anspruch 1, dadurch gekennzeichnet, daß der Latex (B) aus Partikeln besteht, die wenigstens eine, aus weichen Monomeren erhaltene elastomeren Schicht, und eine aus harten Monomeren erhaltene Schicht haben, die sie mit dem Polymeren (A) verträglich macht.

3. Zusammensetzung nach Anspruch 2, dadurch gekennzeichnet, daß die Latexpartikel (B) sich aus einer ersten nicht elastomeren Phase, einer elastomeren Zwischenphase und einer Endphase zusammensetzen, die die gleichen Monomeren wie das Polymere (A) enthält.

4. Zusammensetzung nach einem der Ansprüche 1 bis 3, dadurch gekennzeichnet, daß der mittlere Durchmesser der Partikel zwischen 40 und 500 nm beträgt.

5. Zusammensetzung nach einem der Ansprüche 3 und 4, dadurch gekennzeichnet, daß die erste nicht elastomere Phase aus 65 bis 20 Gew.% Butylacrylat und 35 bis 80 Gew.% Methylmethacrylat besteht, und die elastomere Zwischenphase aus 80 bis 95 Gew.% Butylacrylat und 5 bis 20 Gew.% Styrol besteht.

6. Zusammensetzung nach einem der Ansprüche 3 bis 5, dadurch gekennzeichnet, daß die erste nicht elastomere Phase nicht vernetzt ist.

7. Verfahren zur Herstellung einer polymeren Zusammensetzung nach Anspruch 1, dadurch gekennzeichnet, daß man in einem ersten Schritt das Polymere (A) und der Latex (B) bei einer Temperatur zwischen 170 und 240°C mischt, und dann in einem zweiten Schritt bei einer Temperatur zwischen 170 und 220°C (C) hinzufügt und in wirksamer Weise vermischt.

8. Formteile, die aus wenigstens einem Material bestehen, das aus einer Zusammensetzung nach Anspruch 1 erhalten wurde.

9. Formteile nach Anspruch 8, die in Form von Platten der Stärke 1 bis 8 mm vorliegen.

10. Transparente Formteile, die aus einer Zusammensetzung nach Anspruch 5 erhalten wurden.

11. Formteile nach Anspruch 8, die als mehrschichtiges Material vorliegen, das eine Platte aus üblichen Polymethylmethacrylat enthält.

**Claims**

1. Polymer composition with high impact strength, comprising (A) at least one methyl methacrylate-based polymer and (B) at least one elastomer latex, characterised in that it additionally comprises (C) at least one vinylidene fluoride-based polymer, in that the weight ratio (B)/(A) is between 0.1 and 0.5 and in that the weight ratio (C)/(A) is between 0.1 and 0.45.

2. Composition according to Claim 1, characterised in that the latex (B) consists of particles comprising at least one elastomeric layer obtained from soft monomers and a layer for making it compatible with the polymer (A), obtained from hard monomers.

3. Composition according to Claim 2, characterised in that the latex particles (B) comprise a first nonelastomer phase, an intermediate elastomer phase and a final phase containing the same monomers as the polymer (A).

4. Composition according to one of Claims 1 to 3, characterised in that the mean diameter of the particles is between 40 and 500 nm.

5. Composition according to either of Claims 3 and 4, characterised in that the first nonelastomer phase consists of 65 to 20% by weight of butyl acrylate and of 35 to 80% by weight of methyl methacrylate, and the intermediate elastomer phase consists of 80 to 95% by weight of butyl acrylate and of 5 to 20% by weight of styrene.

6. Composition according to one of Claims 3 to 5, characterised in that the first nonelastomer phase is not crosslinked.

7. Process for the manufacture of a polymer composition according to Claim 1, characterised in that in a first stage the polymer (A) and the latex (B) are mixed at a temperature of between 170°C and 240°C and then, in a second stage, (C) is added and mixed efficiently at a temperature of between 170°C and 220°C.

8. Shaped articles comprising at least one material obtained from a composition according to Claim 1.

9. Shaped articles according to Claim 8, in the form of sheets with a thickness of between 1 and 8 mm.

10. Transparent shaped articles obtained from a composition according to Claim 5.

11. Shaped articles according to Claim 8, in the form of a multilayer material comprising a standard polymethyl methacrylate sheet.